# EUROPÄISCHE PATENTANMELDUNG

(11) **EP 4 749 783 A1**
(43) Veröffentlichungstag der Anmeldung: **27.05.2026**
(21) Anmeldenummer: 24215205.6
(22) Anmeldetag: 25.11.2024
(51) Int. Cl.: H01M 50/204, H01M 50/209, H01M 50/244, H01M 50/233, H01M 50/224, H01M 50/249, H01M 50/262, H01M 50/264, H01M 50/267, H01M 50/289, H01M 50/291, H01M 50/293

(54) **BATTERIETRÄGERANORDNUNG MIT EINEM TRÄGER**

(71) Anmelder: Benteler Automobiltechnik GmbH, 33102 Paderborn (DE)
(72) Erfinder: HANDING, Christian, 33449 Langenberg (DE); MICHEL, Kai, 33154 Salzkotten (DE); SCHMITZ, Stefan, 33739 Bielefeld (DE)
(74) Vertreter: Osterhoff, Utz

(57) **Zusammenfassung**

Die Erfindung betrifft eine Batterieträgeranordnung aufweisend eine Batteriewanne (1) aus metallischem Werkstoff, mit einem Boden (2) und den Boden (2) umlaufenden Seitenwand (3), wobei in der Batteriewanne (1) Batterien angeordnet sind und in der Batteriewanne (1) mindestens einen Träger (8) als Querträger und/oder Längsträger angeordnet ist, welcher aus einem Stahlwerkstoff hergestellt ist, dadurch gekennzeichnet, dass der Träger (8) im Querschnitt als einseitig offenes Hohlprofil ausgebildet ist, aufweisend einen Steg (13) und sich von dem Steg (13) erstreckende Schenkel (14), wobei der Steg (13) und teilweise die Schenkel (14) längenabschnittsweise ausgeschnitten sind und in dem Ausschnitt (12) bereichsweise eine Spange (15) eingesetzt ist, welche gegenüber dem Steg (13) höhenversetzt gelagert ist.

## Beschreibung

Die vorliegende Erfindung betrifft eine Batterieträgeranordnung gemäß den Merkmalen im Oberbegriff von Anspruch 1.

Aus dem Stand der Technik sind Batterieträger bekannt, die im Unterflur eines Kraftfahrzeuges eingesetzt sind. Hierzu kann ein Fahrzeug beispielsweise vollständig elektrisch angetrieben werden oder aber als sogenanntes Hybrid-Fahrzeug der elektrische Teil der Antriebsenergie gespeichert werden, welcher beispielsweise von einem Verbrennungsmotor erzeugt wird.

Solche Batterieträgeranordnungen sind hinreichend aus dem Stand der Technik bekannt. Beispielsweise aus der DE 10 2017 109 722 A1 oder auch der DE 10 2020 107 635 A1. Die Batterieträger zeigen sich durch eine Batteriewanne aus, die aus metallischem Werkstoff hergestellt ist. Die Batteriewanne kann dabei beispielsweise als Umformbauteil oder auch als Faltbauteil aus einer Blechplatine hergestellt sein. Hierzu kommen Stahlwerkstoffe oder auch Leichtmetallwerkstoffe zum Einsatz. Auch kann eine solche Batteriewanne gebaut sein, mithin einer ebenen Bodenplatte mit einer umlaufenden Rahmenstruktur ausgebildet sein.

Die Batteriewanne kann durch einen Deckel oder auch eine Haube verschlossen werden. Im Inneren der Batteriewanne sind dann Batterien angeordnet, die auch als Antriebsbatterien oder elektrische Energiespeichermodule bezeichnet werden können. Die Batterien selbst sind in ihrer flächigen Erstreckung kleiner als die Batteriewanne an sich. Somit müssen die Batterien innerhalb der Batteriewanne befestigt werden. Hierzu sind innerhalb der Batteriewanne Befestigungspunkte vorgesehen.

Damit die Batteriewanne sowohl Aufnahmen zur Befestigung von Batterien aufweist, jedoch auch eine gewisse Eigensteifigkeit und Crashsicherheit aufweist, ist es ferner aus dem Stand der Technik bekannt, dass innerhalb der Batteriewanne Querträger und/oder Längsträger angeordnet sind.

Aufgabe der vorliegenden Erfindung ist es, ausgehend vom Stand der Technik, einen Batterieträger aufzuzeigen, der bei günstiger Herstellung einen optimierten Innenraum für die Aufnahme von Batterien sowie entsprechender Verkabelung und Elektronik aufweist, bei gleichzeitig verbesserter Crashperformance.

Die zuvor genannte Aufgabe wird erfindungsgemäß bei einer Batterieträgeranordnung mit den Merkmalen im Anspruch 1 gelöst.

Bevorzugte Ausgestaltungsvarianten sind Gegenstand der abhängigen Ansprüche.

Die Batterieträgeranordnung weist eine Batteriewanne auf aus einem metallischen Werkstoff, insbesondere Stahl. Die Batteriewanne hat hierzu einen Boden und eine den Boden umlaufende Seitenwand. Mithin erheben sich Seitenwände vom Boden und stehen gegenüber dem Boden auf die Kraftfahrzeugvertikalrichtung bezogen insbesondere nach oben ab. Bevorzugt kann die Batteriewanne mit einem Deckel oder einer Haube verschlossen werden. Am oberen Ende einer Seitenwand ist bevorzugt ein außen umlaufender Flansch vorgesehen.

In der Batteriewanne selbst sind dann Batterien, die auch als Antriebsbatteriewannen bezeichnet werden können, angeordnet.

Die Batteriewanne ist besonders bevorzugt als einstückig und werkstoffeinheitlich hergestellte Blechwanne hergestellt. Dies kann insbesondere durch einen Tiefziehprozess erfolgen.

Die Batteriewanne ist bevorzugt aus einer Stahllegierung hergestellt sein. Die Batteriewanne kann, insbesondere, wenn sie aus einer Stahllegierung hergestellt ist, insbesondere als Warmumform- und Presshärtebauteil hergestellt sein. Alternativ oder ergänzend kann die Batteriewanne auch aus einer Tailored Platine, beispielsweise einem Tailored Welded Blank oder einem Tailored Rolled Blank, hergestellt sein und optional, zumindest bereichsweise warmumgeformt und pressgehärtet sein. Insbesondere, wenn die Batteriewanne aus einem Stahl als warmumgeformtes und pressgehärtetes Bauteil ausgebildet ist, weist dies eine Zugfestigkeit Rm > 980 MPa auf. Die Batteriewanne kann bevorzugt auch aus zink- oder aluminiumsiliziumbeschichtetem Stahlblech hergestellt sein. Optional kann eine Korrosionsschutzlackierung, insbesondere KTL-Lackierung, zumindest außenseitig oder an der Unterseite der Wanne ausgebildet sein.

In der Batteriewanne ist mindestens ein Träger angeordnet. Der Träger ist als Querträger und/oder als Längsträger ausgebildet. Der Träger selbst ist aus einem Stahlwerkstoff hergestellt. Insbesondere wird der Träger als Umformbauteil, insbesondere Blechumformbauteil, aus dem Stahlwerkstoff hergestellt. Hierzu ist erfindungsgemäß der Träger im Querschnitt als einseitig offenes Hohlprofil ausgebildet, welcher einen Steg und sich von dem Steg erstreckende Schenkel aufweist. Der Steg und teilweise die Schenkel sind längenabschnittsweise ausgeschnitten. Erfindungsgemäß ist in dem Ausschnitt bereichsweise eine Spange eingesetzt, wobei die Spange, insbesondere ein Spangensteg bzw. eine Auflagefläche der Spange, gegenüber dem Steg des Trägers höhenversetzt gelagert ist.

Hierdurch wird es erfindungsgemäß ermöglicht, den Träger als Stahlblechbauteil herzustellen, was ein geringes Eigengewicht bei gleichzeitig hoher Steifigkeitmit sich bringt. Dies bringt Fertigungsvorteile mit sich, da ein Stahlblechbauteil mitunter einfacher zu bearbeiten ist als ein Bauteil aus einer Leichtmetalllegierung. Ferner bringt die Verwendung des Stahlwerkstoffs Gewichtsvorteile bei gleichzeitig höherer Steifigkeit mit sich. Es ist weniger Materialeinsatz und weniger Eigengewicht notwendig, bei gleichzeitig mindestens gleicher oder erhöhter Steifigkeit des Trägers. Einen eventuellen Nachteil hinsichtlich möglicher Anbindungspunkte an bzw. in dem Träger unterschiedlich und individuell zu platzierende Anbindungspunkte an bzw. in dem Träger selbst, ist erfindungsgemäß in dem Träger mindestens eine Spange eingesetzt. Es können auch über den Längsverlauf des Trägers mehrere Spangen eingesetzt sein. Hierdurch werden durch die mindestens eine Spange bzw. die mehreren Spangen die Möglichkeit gegeben, unterschiedliche individuell abgestimmte Anbindungspunkte in einem Stahlträger auf einfache und kosteneffiziente Weise bereitzustellen.

Der Träger selbst ist insbesondere im Querschnitt U-förmig bzw. hutförmig ausgebildet. Die Spange selbst kann auch als Profilbauteil ausgebildet sein, wobei die Spange im Querschnitt dann ebenfalls bevorzugt U-förmig ausgebildet ist. Die Spange weist hierzu einen Spangensteg und sich von dem Spangensteg erstreckende Spangenschenkel auf. Sinn der Erfindung ist der Höhenversatz, dann ausgebildet zwischen dem Steg des Trägers und dem Spangensteg der Spange. Auf die Kraftfahrzeugvertikalrichtung bezogen ist insbesondere die Spange gegenüber dem Steg nach unten versetzt, so dass in dem Träger selbst durch die Spange ein tieferer Anbindungspunkt bereitgestellt wird.

Die Spange ist selbst mit dem Träger gekoppelt, insbesondere durch thermisches Fügen. Es könnte jedoch auch ein anderes Kopplungsverfahren, beispielsweise ein Nietverfahren oder auch ein Klebeverfahren, verwendet werden. Somit wird der Träger zunächst als Blechumformbauteil aus einer Stahllegierung hergestellt. Der Träger selbst kann auch warmumgeformt und pressgehärtet sein. Der Träger weist entweder bevorzugt vorher einen Ausschnitt auf, so dass längenabschnittsweise der Steg und zumindest bereichsweise bzw. teilweise die Stege ausgeschnitten sind.

Der Träger kann jedoch auch nach der Blechumformung ausgeschnitten werden, beispielsweise durch ein Laserschneideverfahren.

Die Spange selbst weist dann bevorzugt eine Wandstärke auf, die größer ist als die Wandstärke des Trägers. Dies bietet den Vorteil, dass die Spange eine hohe Eigensteifigkeit aufweist. Gleichzeitig ist es jedoch möglich, dass zumindest der Spangensteg eine höhere Wandstärke aufweist und somit beispielsweise in die Wandung des Spangenstegs ein Gewinde direkt geschnitten werden kann, so dass unmittelbar ein Anschraubpunkt entsteht, ohne zusätzliche Verwendung von Einschweiß- oder Einschraubmuttern.

Die Spange weist somit mindestens ein Befestigungselement auf. Das Befestigungselement kann beispielsweise Einschweiß- oder Einschraubmutter sein. Das Befestigungselement kann jedoch auch ein unmittelbar in die Wandung der Spange eingeschnittenes Gewinde sein. Die Spange selbst kann bevorzugt weiterhin eine erhabene Fläche bzw. Auflagenfläche aufweisen, die gegenüber dem Spannsteg wiederum höhenversetzt gelagert ist. Die Auflagenfläche ist bevorzugt auf die Kraftfahrzeugvertikalrichtung bezogen dann höher gelagert als der Spannungssteg selber.

In dem Steg des Trägers selbst sind bevorzugt auch Befestigungselemente angeordnet. Dies können beispielsweise Einschweiß- oder Einschraubmuttern sein, die dann in dem Steg angeordnet sind. Durch das Befestigungselement in der Spange ist somit eine individuelle Positionierung von weiteren Befestigungspunkte möglich.

Weiterhin besonders bevorzugt weisen die Schenkel des Trägers im Bereich der Spange eine Einformung auf. Dies bedeutet im Sinne der Erfindung, dass die Schenkel im Bereich der Spange nach innen eingeformt sind. Somit sind Bereich der Schenkel auf den Querschnitt des Trägers bezogen, aufeinander zu zeigend eingeformt. Die Spangenschenkel übergreifen dann außenseitig die Einformung. Als ein erfindungswesentlicher Vorteil hierbei ist, dass der Träger selbst im Bereich der Spange keine vergrößerte Breite aufweist. Hierdurch findet eine Bauraumoptimierung im inneren des Batterieträgers statt, bei gleichzeitig individueller Positionierbarkeit von Anschraubpunkten auf dem Träger selbst.

Damit der Träger in der Batteriewanne angeordnet ist, ist dieser insbesondere hutförmig ausgebildet. Die Schenkel des Trägers liegen dabei besonders bevorzugt auf dem Boden auf und sind hier beispielsweise verklebt oder punktverschweißt. An seinen jeweiligen außenliegenden Stirnseiten kann der Träger ferner bevorzugt an einer Innenseite der jeweiligen Seitenwand anliegen und hier auch insbesondere gefügt sein.

Bevorzugt ist der Steg des Trägers parallel orientiert verlaufend zum Boden des Batterieträgers. Besonders bevorzugt ist auch der Spangensteg parallel verlaufend zum Boden des Batterieträgers. Die Anbindungspunkte im Bereich der Spange können jedoch derart individuell festgesetzt werden, dass die Spange bezogen auf einen Längsverlauf des Trägers, hierzu in einem Winkel angeordnet ist. Somit würde der Spangensteg bezogen auf den Boden der Batteriewanne beliebig schräg angeordnet werden können, so dass der Befestigungspunkt hier in einem individuellen Winkel angeordnet ist.

Weitere Aspekte und Vorteile der vorliegenden Erfindung sind Gegenstand der nachfolgenden Beschreibung. Bevorzugte Ausführungsvarianten werden in den schematischen Figuren dargestellt. Diese dienen dem einfachen Verständnis der Erfindung. Es zeigen:
- Figur 1: eine Batteriewanne eines Batterieträgers in Draufsicht,
- Figur 2: eine Batteriewanne eines Batterieträgers in Draufsicht,
- Figur 3: einen erfindungsgemäßen Träger in Perspektivdarstellung,
- Figur 4a, b, c: Seitenansichten, Draufsichten sowie Querschnittsansicht des Trägers in einer ersten Ausgestaltungsvariante und
- Figur 5a, b, c: eine alternative Ausgestaltungsvariante zu Figur 4.

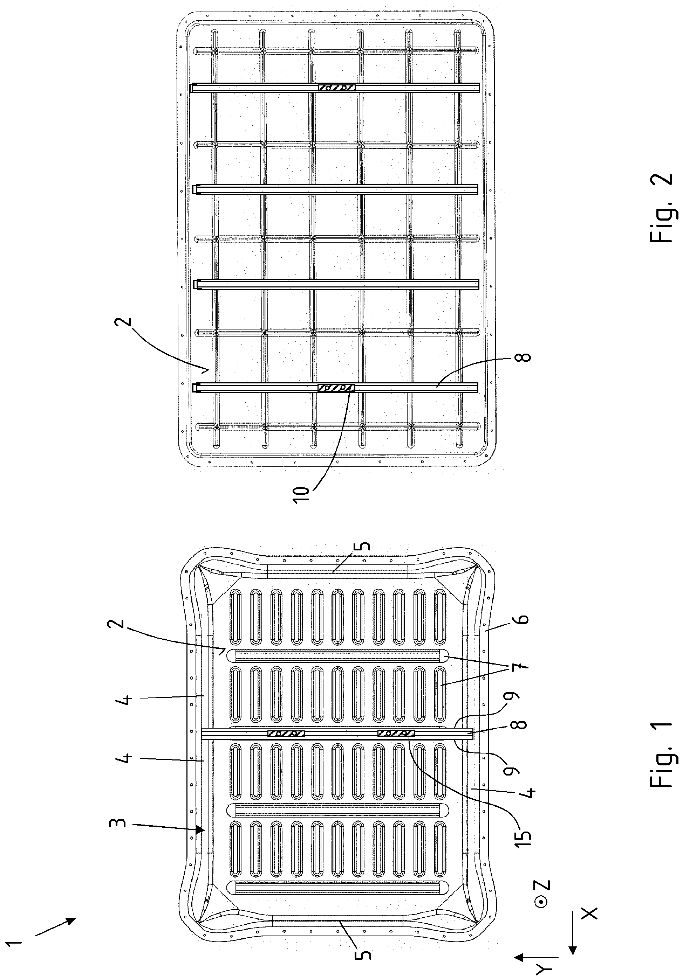

Die Figur 1 und 2 zeigen eine jeweilige Batteriewanne eines Batterieträgers in Draufsicht.

Die Batteriewanne 1 weist einen Boden 2 auf. Seitlich umlaufend ist eine Seitenwand 3 ausgebildet. Diese sind in Kraftfahrzeug-X-Richtung als Querseitenwand 5 ausgebildet und auf die Kraftfahrzeug-Y-Richtung jeweils als Längsseitenwand. Auf die Bildebene bezogen auf den Betrachter zu zeigend, sind die Wände auch in Kraftfahrzeugvertikalrichtung Z angeordnet. Außen umlaufend ist ein Flansch 6 vorgesehen, mit dem einem nicht näher dargestellten Deckel oder einer Haube gekoppelt werden, so dass sich innerhalb der Batteriewanne 1 ein Innenraum zur Aufnahme von nicht näher dargestellten Batterien ergibt. In dem Boden 2 können auch Längs- und Quersicken 7 eingelassen sein, welche beispielsweise zur Aussteifung und/oder zur Ausbildung von Kühlkanalstrukturen dienen.

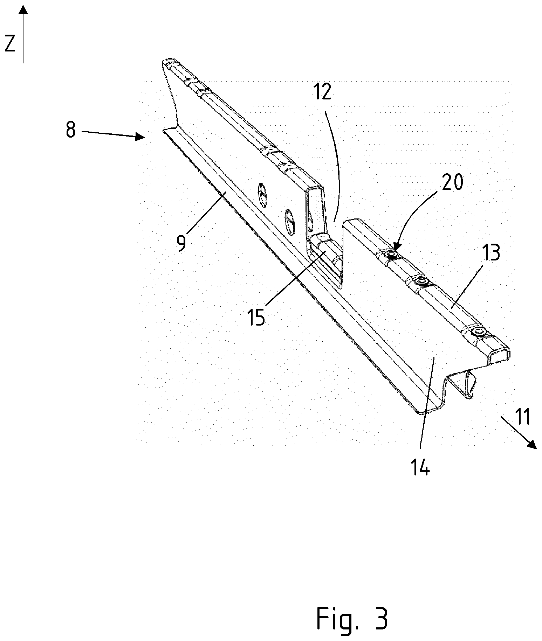

Erfindungsgemäß ist nunmehr ein jeweiliger Träger 8 in Form eines Querträgers eingesetzt. Der Querträger ist auf dem Boden 2 aufgesetzt und weist hierzu einen Flansch 9 eines hutförmigen Profils auf, mit welchem er auch mit dem Boden 2 gekoppelt ist. Längenabschnittsweise ist in dem Träger 8 eine Spange 10 eingesetzt, welche nachfolgend in Figur 3 beschrieben wird.

Der Träger 8 ist als längliches Bauteil dargestellt und weist im Querschnitt eine U-förmige bzw. hutförmige Kontur auf. Abweichend von Figur 3 können die Flansche 9 auch nur längenabschnittsweise ausgebildet sein, um lokale Koppellaschen zum Boden 2 zu bilden. In Längsrichtung des Trägers 8 ist dieser längenabschnittsweise ausgeschnitten bzw. weist einen Ausschnitt auf. In diesen Ausschnitt ist erfindungsgemäß eine Spange 10 eingesetzt. Der Träger 8 selbst weist einen Steg 13 auf sowie von dem Steg 13 sich erstreckende Schenkel 14. Die Schenkel 14 sind im Wesentlichen in Kraftfahrzeugvertikalrichtung Z orientiert in Einbaulage. Der Steg 13 ist im Wesentlichen parallel zu einer Ebene aus der Kraftfahrzeuglängsrichtung X und Kraftfahrzeugquerrichtung Y aufgespannt orientiert angeordnet. Die Spange 10 ist somit gegenüber dem Steg 13 relativ bezogen höhenversetzt. Die Spange 10 ist insbesondere bezogen auf die Kraftfahrzeugvertikalrichtung Z gegenüber dem Steg 13 nach unten versetzt.

Der Steg 13 des Trägers 8 kann Befestigungselemente 20 aufweisen, welche hier lokal abgesenkt ausgebildet sind und somit nach oben bündig zur Ebene des Stegs 13 positioniert sind.

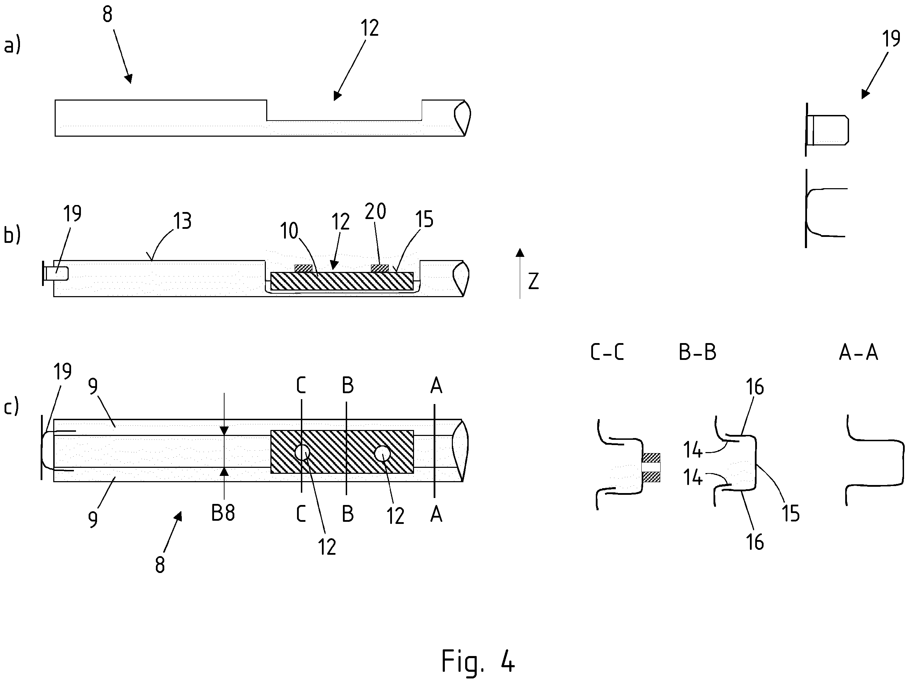

Figur 4a, b, und c zeigen den Aufbau eines solchen Trägers 8. Hier ist gemäß Figur 4a ein Längenabschnitt eines Trägers 8 dargestellt, welcher den Ausschnitt aufweist. Im Querschnitt weist der Träger 8 einen Steg 13 auf sowie von dem Steg 13 sich erstreckende Schenkel 14. Von den Schenkeln 14 wiederum stehen die Flansche 9 ab, mit welchem der Träger 8 auf dem Boden 2 aufliegt.

Gemäß Figur 4b wird sodann in dem Ausschnitt 12 die Spange 10 positioniert. Die Spange 10 selbst ist hier als im Querschnitt U-förmiges Bauteil ausgebildet. Die Spange 10 weist dazu einen Spangensteg 15 auf sowie sich von dem Spangensteg 15 erstreckende Spangenschenkel 16. Die Spangenschenkel 16 liegen an den Schenkeln 14 des Trägers 8 an und sind mit diesen gefügt. Ferner bildet der Spangensteg 15 selbst eine Auflagefläche, mit welcher insbesondere die Spange 10, auf die Kraftfahrzeugvertikalrichtung Z bezogen, gegenüber dem Steg 13 höhenversetzt ist. Hier können Befestigungspunkte angeordnet sein, welche insbesondere wiederum gegenüber dem Spangensteg 15 erhaben bzw. relativ bezogen, nach oben versetzt angeordnet sein können.

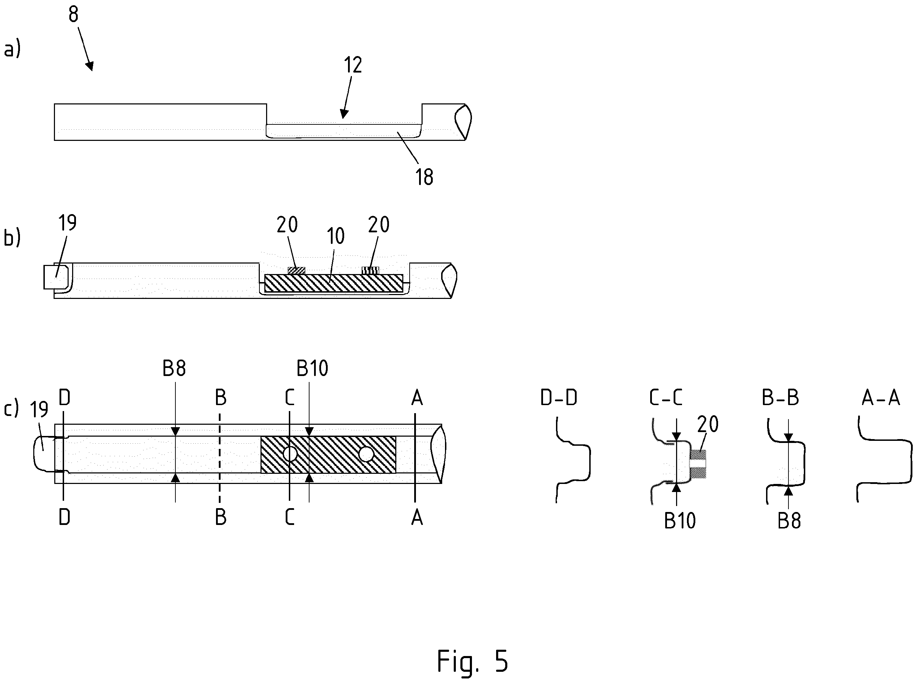

Figuren 5a, b und c zeigen eine alternative Ausgestaltungsvariante zu Figur 4. Hier sind die Schenkel 14 des Trägers 8 im Bereich des Ausschnitts nach innen eingeformt. Die Spange 10 weist somit die gleiche Breite B10 auf wie die Breite B8 des Trägers 8 selber. Der im Innenraum des Batterieträgers zur Verfügung stehende Raum ist hierdurch optimiert, insbesondere können beispielsweise die Batterien bündig seitlich an die Schenkel 14 des Trägers 8 anliegen. Somit kann gemäß Draufsicht von Figur 5c eine durchliegende Anlagefläche an Seiten der Schenkel 14 erreicht werden, da die Schenkel 14 des Trägers 8, aber auch die Spangenschenkel 16 eine gleiche Breite haben.

Zudem zeigen Figur 4 und 5 verschiedene innenseitige Anbindungen des Trägers 8 an die Seitenwand 3 der Batteriewanne 1.

In der Bildebene von Figur 4 rechts ist ein Koppelbauteil 19 zur Anbindung eines Endes des Trägers 8 an der Innenseite der Seitenwand der Batteriewanne angezeigt, oben in vergrößerter Seitenansicht und darunter in einer Draufsicht. Gemäß Figur 4b und 4c ist das Koppelbauteil 19 dann mit dem Träger 8 gekoppelt. Nicht näher dargestellt ist die Innenwand der Batterie. Die Rückseite des Koppelbauteils 19 ist dann an die Innenwand der Batteriewanne 1 angebunden.

Gleiches gilt für Figur 5b und c. Auch hier ist ein Koppelbauteil 19 in Form einer Spange 10 gezeigt. Dieses kann gemäß Figur 5b und c dann an den Schenkeln 14 des Trägers gekoppelt sein, so dass sich insgesamt die Breite B8 des Trägers 8 ergibt. Mithin sind die Schenkel 14 nach innen eingedrückt zur Anbindung des Koppelbauteils 19. Das Koppelbauteil 19 selbst weist dann auch die Breite B8 des Trägers auf. Auch hier wird eine Bauraumoptimierung durchgeführt.

Ferner zeigen jeweils Figur 4c und 5c auf die Bildebene bezogen, rechts, verschiedenen Schnittansichten.

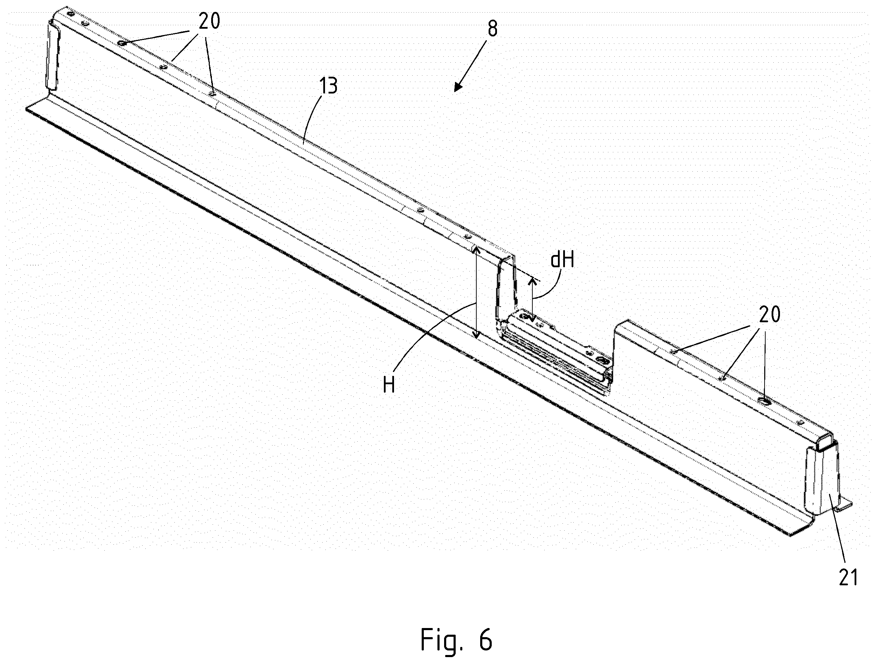

Figur 6 zeigt eine alternative Ausführungsform des Trägers 8. Im Vergleich zur Ausführungsform von Figur 3 weist der Träger 8 nun mehrere nicht abgesenkte Befestigungselemente 20 auf, welche über die Ebene des Stegs 8 überstehen. Beispielsweise können Muttern, insbesondere Einschweißmuttern, von unten an den Steg 13 angesetzt sein. Zudem sind die Enden des Trägers 8 teilweise verschlossen und bilden eine ebene, im Vergleich zu Figur 3 großflächigere Seitenaufprallfläche 21 aus. Damit wird erreicht, dass ein Durchstoßen bzw. Einschneiden der Seitenwand 3 der Batteriewanne bei einer crashbedingten Verformung der Batteriewanne 1 und ein kritisches Verformungsniveau der Batteriewanne 1 in den Batterieraum hinein, vermieden werden können. Die Seitenaufprallfläche 21 ist beispielsweise durch eine endseitig aufgesetzte Lasche auf dem Träger 8 ausgebildet.

Die Seitenaufprallfläche 21 ist hier durch ein zusätzlich an einem (oder beiden) Schenkel(n) 14 gefügtes Blechformteil bereitgestellt, kann aber auch durch Abkantung bzw. Biegen der stirnseitigen Enden des Trägers 8 integriert ausgeformt sein. Die Seitenaufprallfläche 21 kann spaltfrei an der Seitenwand 3 der Batteriewanne 1 anliegen, ist vorzugsweise aber einige Millimeter oder Zentimeter beabstandet.

Erkennbar ist in den Beispielen sowohl in Figur 3, als auch in Figur 6, der Höhenversatz dH zwischen Spangensteg 15 und Steg 13 des Trägers 8, welcher jeweils höchstens 90 % der Trägerhöhe H, vorzugsweise zwischen 10 % und 85 %, bevorzugt zwischen 20 % und 75 % der Höhe H des Trägers beträgt. Dies dient der Knicksteifigkeit des Trägers, insbesondere bei einem Seitenaufprall. Gleichzeitig entspricht die Spangenlänge L10 annähernd der Länge L12 des Ausschnitts 12 des Trägers 8, was ebenso der Knickstabilität zuträglich ist.

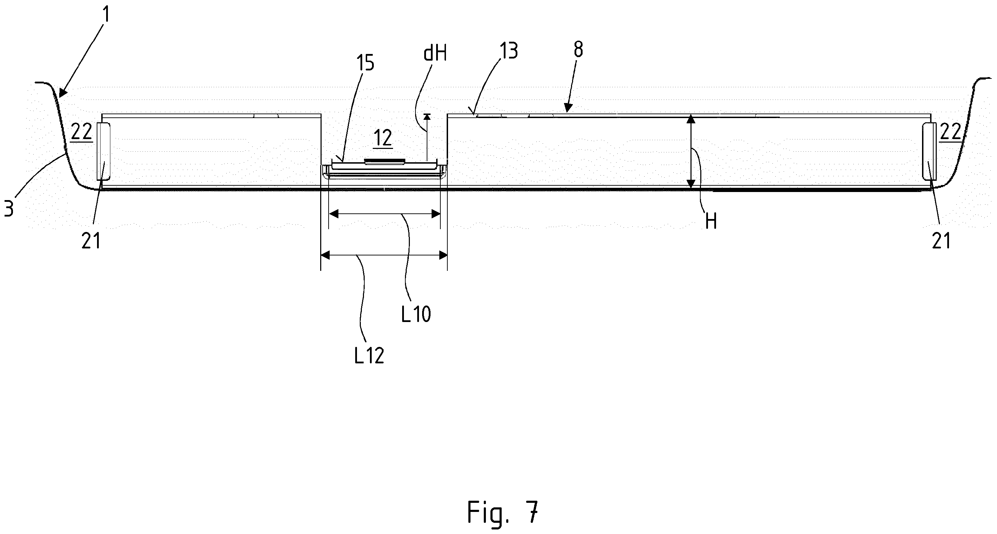

Figur 7 schließlich zeigt in einer Querschnittsansicht durch die Batteriewanne 1 mit dem Träger 8 aus Figur 6 in Einbaulage. Erkennbar ist der durch die (tiefziehbedingt) schräge Seitenwand 3 und das vertikale stirnseitige Trägerende entstehende Spaltabstand 22, wodurch fertigungsbedingte Toleranzprobleme oder Koppelbauteile wie in Figur 3 vermeidbar sind.

### Bezugszeichen:

- 1 -: Batteriewanne
- 2 -: Boden
- 3 -: Seitenwand
- 4 -: Längsseitenwand
- 5 -: Querseitenwand
- 6 -: Flansch
- 7 -: Sicke
- 8 -: Träger
- 9 -: Flansch
- 10 -: Spange
- 11 -: Längsrichtung zu 8
- 12 -: Ausschnitt
- 13 -: Steg
- 14 -: Schenkel
- 15 -: Spangensteg
- 16 -: Spangenschenkel
- 17 -: Befestigungspunkt
- 18 -: Einformung
- 19 -: Koppelbauteil
- 20 -: Befestigungselement
- 21 -: Seitenaufprallfläche
- 22 -: Spaltabstand

- B8 -: Breite zu 8
- B10-: Breite zu 10
- H -: Höhe des Trägers
- dH -: Höhenversatz Steg zu Spagensteg
- L10 -: Länge zu 10
- L12 -: Länge zu 12
- X -: Kraftfahrzeuglängsrichtung

- Y -: Kraftfahrzeugquerrichtung
- Z -: Kraftfahrzeugvertikalrichtung

## Patentansprüche

1. Batterieträgeranordnung aufweisend eine Batteriewanne (1) aus Stahlwerkstoff, mit einem Boden (2) und einer den Boden (2) umlaufenden Seitenwand (3), wobei in der Batteriewanne (1) Batterien anordenbar sind und in der Batteriewanne (1) mindestens ein Träger (8) als Querträger oder Längsträger angeordnet ist, welcher aus einem Stahlwerkstoff hergestellt ist, **dadurch gekennzeichnet, dass** der Träger (8) im Querschnitt als U-förmiges oder hutförmiges Pressumformbauteil ausgebildet ist, aufweisend einen Steg (13) und sich von dem Steg (13) erstreckende Schenkel (14), wobei der Steg (13) und teilweise die Schenkeln (14) längenabschnittsweise ausgeschnitten sind und in dem Ausschnitt (12) bereichsweise eine Spange (10) eingesetzt ist, welche gegenüber dem Steg (13) höhenversetzt gelagert ist.

2. Batterieträgeranordnung nach Anspruch 1, **dadurch gekennzeichnet, dass** die Spange (10) ein Profilbauteil ist, insbesondere weist die Spange (10) einen Spangensteg (15) und sich davon erstreckende Spangenschenkel (16) auf.

3. Batterieträgeranordnung nach Anspruch 1 oder 2, **dadurch gekennzeichnet, dass** die Spange (10) mit dem Träger (8) gekoppelt ist, insbesondere durch thermisches Fügen.

4. Batterieträgeranordnung nach einem der vorgenannten Ansprüche, **dadurch gekennzeichnet, dass** die Spange (10) mindestens ein gewindetragendes Befestigungselement (20) umfasst.

5. Batterieträgeranordnung nach einem der vorgenannten Ansprüche, **dadurch gekennzeichnet, dass** die Spange (10) eine erhabene Fläche aufweist, die gegenüber dem Spangensteg (15) höhenversetzt gelagert ist.

6. Batterieträgeranordnung nach einem der vorgenannten Ansprüche, **dadurch gekennzeichnet, dass** in dem Steg (13) Befestigungselemente (20) angeordnet sind.

7. Batterieträgeranordnung nach einem der vorgenannten Ansprüche, **dadurch gekennzeichnet, dass** die Schenkel (14) im Bereich der Spange (10) eine Einformung (18) aufweisen, insbesondere erstreckt sich die Einformung (18) über eine Länge, die mindestens dem Längenabschnitt des Ausschnitts (12) und/oder der Länge der Spange (10) entspricht.

8. Batterieträgeranordnung nach Ansprch 8, **dadurch gekennzeichnet, dass** die Schenkel (14) im Bereich der Spange (10) nach innen eingeformt sind, dergestalt, dass die Spangenschenkel (16) in der Einformung (18) aufgenommen sind.

9. Batterieträgeranordnung nach einem der vorgenannten Ansprüche, **dadurch gekennzeichnet, dass** der Träger (8) mit dem Boden (2) gekoppelt ist.

10. Batterieträgeranordnung nach einem der vorgenannten Ansprüche, **dadurch gekennzeichnet, dass** der Träger (8) an einer Innenseite der Seitenwand (3) mit seiner Stirnseite anliegt und bevorzugt gekoppelt ist, und/oder dass der Träger (8) an einer Innenseite der Seitenwand (3) über ein toleranzausgleichenden Schiebesitz stoffschlüssig oder kraftschlüssig befestigt ist.

11. Batterieträgeranordnung nach einem der vorgenannten Ansprüche, **dadurch gekennzeichnet, dass** der Träger (8) in mindestens einem Längenabschnitt hutförmig geformt ist mit an die Schenkel (14) anschließenden Flanschen (9), welche sich winkelig von den Schenkeln (14) weg erstrecken und mit dem Boden (2) des Batterieträgers stoffschlüssig gefügt sind.

## Geänderte Patentansprüche

### Geänderte Patentansprüche gemäss Regel 137(2) EPÜ.

1. Batterieträgeranordnung aufweisend eine Batteriewanne (1) aus Stahlwerkstoff, mit einem Boden (2) und einer den Boden (2) umlaufenden Seitenwand (3), wobei in der Batteriewanne (1) Batterien anordenbar sind und in der Batteriewanne (1) mindestens ein Träger (8) als Querträger oder Längsträger angeordnet ist, welcher aus einem Stahlwerkstoff hergestellt ist, wobei der Träger (8) im Querschnitt als U-förmiges oder hutförmiges Pressumformbauteil ausgebildet ist, aufweisend einen Steg (13) und sich von dem Steg (13) erstreckende Schenkel (14), wobei der Steg (13) und teilweise die Schenkel (14) längenabschnittsweise ausgeschnitten sind **dadurch gekennzeichnet, dass** in dem Ausschnitt (12) bereichsweise eine Spange (10) eingesetzt ist, welche gegenüber dem Steg (13) höhenversetzt gelagert ist.

2. Batterieträgeranordnung nach Anspruch 1, **dadurch gekennzeichnet, dass** die Spange (10) ein Profilbauteil ist, insbesondere weist die Spange (10) einen Spangensteg (15) und sich davon erstreckende Spangenschenkel (16) auf.

3. Batterieträgeranordnung nach Anspruch 1 oder 2, **dadurch gekennzeichnet, dass** die Spange (10) mit dem Träger (8) gekoppelt ist, insbesondere durch thermisches Fügen.

4. Batterieträgeranordnung nach einem der vorgenannten Ansprüche, **dadurch gekennzeichnet, dass** die Spange (10) mindestens ein gewindetragendes Befestigungselement (20) umfasst.

5. Batterieträgeranordnung nach einem der vorgenannten Ansprüche, **dadurch gekennzeichnet, dass** die Spange (10) eine erhabene Fläche aufweist, die gegenüber dem Spangensteg (15) höhenversetzt gelagert ist.

6. Batterieträgeranordnung nach einem der vorgenannten Ansprüche, **dadurch gekennzeichnet, dass** in dem Steg (13) Befestigungselemente (20) angeordnet sind.

7. Batterieträgeranordnung nach einem der vorgenannten Ansprüche, **dadurch gekennzeichnet, dass** die Schenkel (14) im Bereich der Spange (10) eine Einformung (18) aufweisen, insbesondere erstreckt sich die Einformung (18) über eine Länge, die mindestens dem Längenabschnitt des Ausschnitts (12) und/oder der Länge der Spange (10) entspricht.

8. Batterieträgeranordnung nach Anspruch 7, **dadurch gekennzeichnet, dass** die Schenkel (14) im Bereich der Spange (10) nach innen eingeformt sind, dergestalt, dass die Spangenschenkel (16) in der Einformung (18) aufgenommen sind.

9. Batterieträgeranordnung nach einem der vorgenannten Ansprüche, **dadurch gekennzeichnet, dass** der Träger (8) mit dem Boden (2) gekoppelt ist.

10. Batterieträgeranordnung nach einem der vorgenannten Ansprüche, **dadurch gekennzeichnet, dass** der Träger (8) an einer Innenseite der Seitenwand (3) mit seiner Stirnseite anliegt und bevorzugt gekoppelt ist, und/oder dass der Träger (8) an einer Innenseite der Seitenwand (3) über einen toleranzausgleichenden Schiebesitz stoffschlüssig oder kraftschlüssig befestigt ist.

11. Batterieträgeranordnung nach einem der vorgenannten Ansprüche, **dadurch gekennzeichnet, dass** der Träger (8) in mindestens einem Längenabschnitt hutförmig geformt ist mit an die Schenkel (14) anschließenden Flanschen (9), welche sich winkelig von den Schenkeln (14) weg erstrecken und mit dem Boden (2) des Batterieträgers stoffschlüssig gefügt sind.
